# EUROPEAN PATENT APPLICATION

(11) **EP 1 641 227 A1**
(43) Date of publication of application: **29.03.2006**
(21) Application number: 04022828.0
(22) Date of filing: 24.09.2004
(51) Int. Cl.: H04M 1/725, H04M 1/247

(54) **Method and apparatus for fast delivery of e-mail by a message transceiver**

(71) Applicant: TOPSEED TECHNOLOGY CORP., Chung Ho City, Taipei Hsien, Taiwan 235 (TW)
(72) Inventor: Chen, Shoei-Lai, Sanshia Jen Taipei Taiwan 237 R.O.C. (TW)
(74) Representative: TER MEER - STEINMEISTER & PARTNER GbR

(57) **Abstract**

A method and an apparatus for fast delivering an electronic mail via a message transceiver, such as cellular phones, personal data assistants and remote controls connected to a network. By pressing a shortcut key in electrical connection with an internal circuit of the message transceiver, the e-mail window is opened immediately. When the message transceiver is operating in the e-mail window, the shortcut key operates as a function key for inputting the symbol @, such that the user can easily input the e-mail address as desired.

## Description

### BACKGROUND OF THE INVENTION

The present invention relates in general to a method and an apparatus for fast delivery of electronic mail (e-mail) by a message transceiver, and more particularly, to a function that enters an electronic mail window interface and inputs the symbol @ instantly when a message transceiver is activated, so as to allow the user to quickly switch to an electronic mail window interface under a standby mode or other application window. Alternatively, the information in other windows can be attached to the electronic mail by inputting the symbol @, such that the electronic mail can be easily and quickly established and delivered.

The development of electronic mail technology and the network has been so popular that every can transmit and receive electronic mail everywhere by various electronic devices such as cellular phones, personal data assistant (PDA), palm pilot and remote control television system (network television). Most of the above devices are portable transceiver for electronic message to perform simple edition of the mail and transmission. One can of course use the network to perform edition and transmission of an electronic mail. Some electronic mail transceiver is also operative to perform stationary or motion image recording, so as to deliver the recorded image to a recipient.

Currently, outlook express system has become the most popular program for receiving and transmitting electronic mails. The most common electronic mail addresses all include the symbol "@" for indication. The symbol @ is easily accessed for most desktop and laptop computers. However, in many electronic message transceivers, such symbol is not readily available. The user has to spend a lot of time searching such symbol in the built-in symbol table or list Such procedure is required for establishing each mailing list or sending every electronic mail. Therefore, it cost great inconvenience in application.

### BRIEF SUMMARY OF THE INVENTION

A method and an apparatus for fast delivering an electronic mail via a message transceiver are provided. The message transceiver includes a cellular phone, a personal data assistant and a remote control connected to a network, for example. By installing a short key on the message transceiver and pressing the shortcut key of the message transceiver, the e-mail window is opened immediately. When the message transceiver is operating in the e mail window, the shortcut key operates as a function key for inputting the symbol @, such that the user can easily input the e-mail address as desired.

Accordingly, the apparatus for fast delivering an electronic mail via a message transceiver of the present invention includes a message transceiver, and at least one shortcut electrically connected to an internal circuit of the message transceiver, the shortcut being operative to switch a current operation window to an e-mail window and input a symbol @ for inputting an e-mail address after entering the e-mail window.

Furthermore, the method of the present invention for fast delivering an e-mail mail by a message transceiver that has a shortcut key includes activating the message transceiver and connecting the message transceiver to a network, entering an e-mail window by pressing the shortcut key when the message transceiver is operating in other application window, and pressing the shortcut key in the e-mail window for inputting an email address.

### BRIEF DESCRIPTION OF THE DRAWINGS

The above objects and advantages of the present invention will be become more apparent by describing in detail exemplary embodiments thereof with reference to the attached drawings in which:
Figure 1 shows an electronic mail transceiver;
Figure 2 shows the operation process for the e-mail transceiver;
Figure 3 shows the operation process of fast delivery of e-mail by the e-mail transceiver;
Figure 4 shows the operation process of another embodiment of fast delivery of e-mail by the e-mail transceiver; and
Figure 5 shows the operation process of another embodiment of fast delivery of e-mail by the e-mail transceiver.

### DETAILED DESCRIPTION OF THE INVENTION

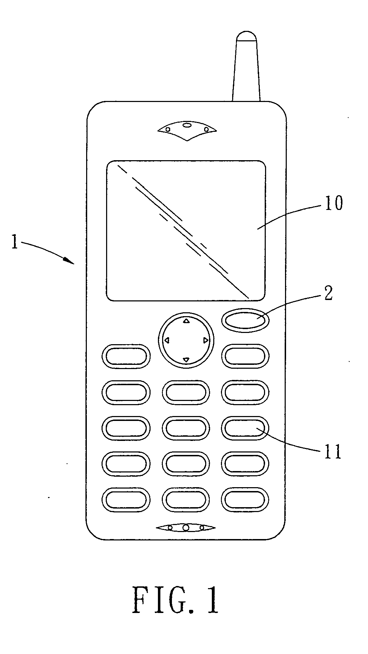

Referring to Figure 1, a fast delivery device of electronic mail includes a message transceiver 1 and one or more than one shortcut key 2.

The message transceiver 1 includes a portable personal electronic mail transceiver that can connect to network, including cellular phone, personal data assistant, and a remote control. The message transceiver 1 is switched on and connected to the network for application.

The shortcut key is directly built on the message transceiver 1 and electrically connected to an internal circuit of the message transceiver 1.

The shortcut key 2 has the fast switching function allowing fast entry to an electronic mail window interface. The shortcut key 2 performs a fast switch between the standby mode or other application window and the electronic mail window. In addition, the information provided in other application window can be formatted according to and attached to an electronic mail opened during the switching process for synchronous transmission. The shortcut key 2 can be set as the function key of the symbol @. When the electronic mail window is opened, the shortcut key 2 is automatically switched to the function key for inputting the symbol @. Thereby, the user can easily input the e-mail address of the recipient or establish contact list.

The shortcut key 2 is an independent and additional input key formed on the message transceiver 1 to fast switch the windows and serve as the function key of the symbol @. It will be appreciated that the key for fast entering the e-mail window may be different from the function key for inputting the symbol @.

In one embodiment, the shortcut key may be obtained by configuring one or more of the original input keys 11 of the message transceiver 2 to achieve the same effect.

The process for operating the message transceiver is further introduced as follows.

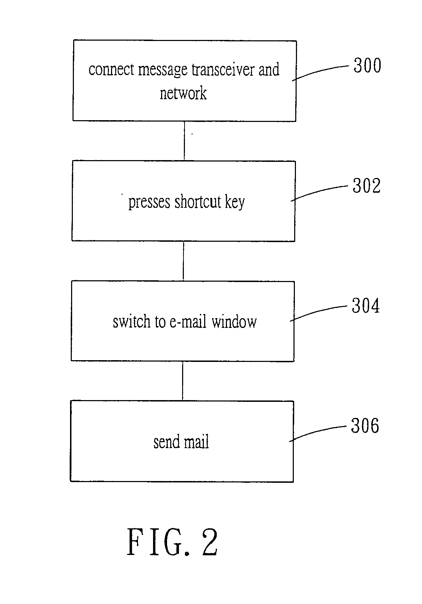

Figure 2 shows the operation process of fast deliver of email by the message transceiver that includes a shortcut key for switching to the e-mail window interface and to input the symbol @.

When the message transceiver 1 is switched on and in the standby mode, the connection between the message transceiver 1 and the network is maintained in step 300. The message transceiver 1 may also be operating in other application window to perform operation such as image capturing and recording. When the user presses the shortcut key in step 302, a control command is input to the message transceiver 1 to immediately switch to the e-mail window in step 304. The user can then use the shortcut key to input the symbol @ for inputting an e-mail address or establishing the contact list. By pressing other function key of the message transceiver 1, other operations such as edition, reading, deleting or attaching a filed to a mail can also be performed. When the edition of the mail is finished, the mail can be sent in step 306.

The following processes are performed under different operation modes.

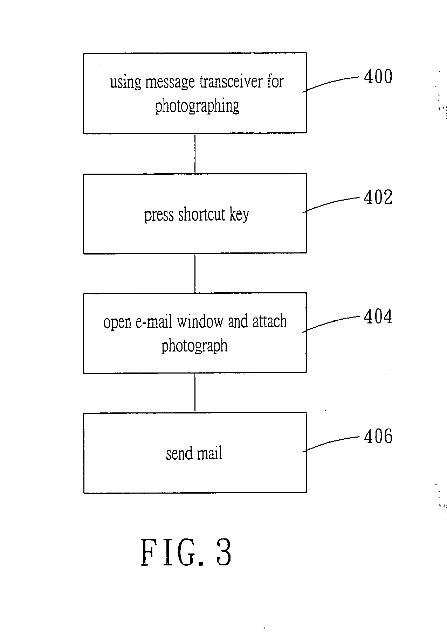

As shown in Figure 3, the process of fast mail delivery when other application is performed is illustrated. As shown, when the user is using the message transceiver 1 for photographing in step 400, the user can presses the shortcut 2 to enter the e-mail window after photograph is taken in step 402. An e-mail window is then opened, and the photograph taken in step 400 is attached to an e-mail in step 404. When the user uses the shortcut key to enter the e-mail address, the photograph is ready to be sent to the e-mail address in step 406.

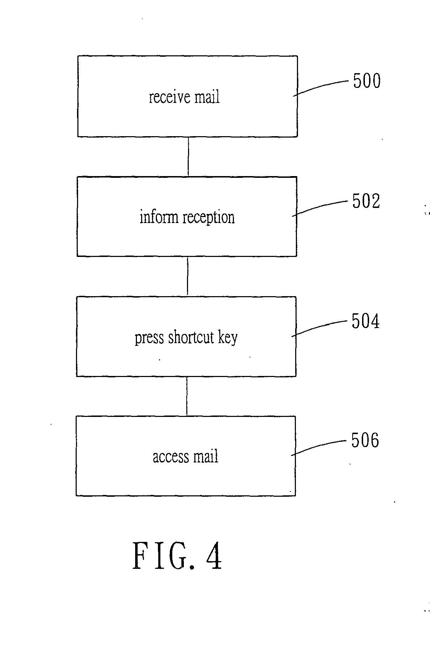

Figure 4 shows the process when the message transceiver 1 receives a notice of an incoming mail. When an electronic mail is received in step 500, an e-mail alert is generated by the message transceiver 1 and displayed on a display unit 10 of the message transceiver 1. For example, the symbol @ may be generated and flashing on the display unit 10 to inform the reception of a new e-mail in step 502. The user can then press the shortcut key 2 in step 504 to switch to the e-mail window, such that the incoming e-mail can be accessed immediately 506.

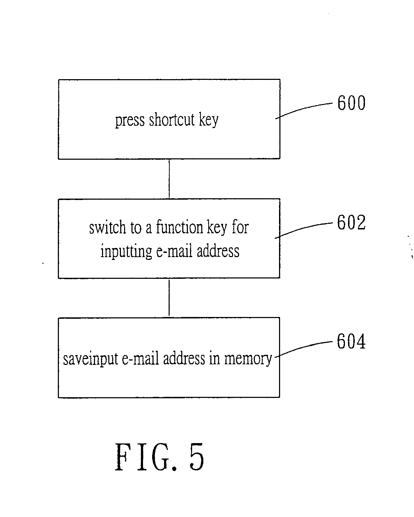

Figure 5 shows another embodiment of fast delivery of an e-email. When the user intends to establish a contact list in the e-mail window, by directly pressing the shortcut key 2 in step 600, the e-mail window is entered. The shortcut key 2 is then switched to a function key of @ for inputting e-mail address in step 602. The user can then save the input e-mail address in the memory in step 604.

While the present invention has been particularly shown and described with reference to preferred embodiments thereof, it will be understood by those of ordinary skill in the art the various changes in form and details may be made therein without departing from the spirit and scope of the present invention as defined by the appended claims.

## Claims

1. An apparatus for fast delivery of an electronic mail, comprising:
a message transceiver;
at least one shortcut electrically connected to an internal circuit of the message transceiver, the shortcut being operative to switch a current operation window to an e-mail window and input a symbol @ for inputting an e-mail address after entering the e-mail window.

2. The apparatus of Claim 1, wherein the shortcut key is operative to switch to the window immediately after being pressed in the current operation window different from the e-mail window.

3. The apparatus of Claim 1, wherein the shortcut key is operative to input the symbol @ after being pressed in the e-mail window.

4. The apparatus of Claim 1, wherein the shortcut key is independent of a built-in input key of the message transceiver.

5. The apparatus of Claim 1, wherein the message transceiver includes a cellular phone, a personal data assistant or a remote control.

6. A method for fast delivering an e-mail mail by a message transceiver that has a shortcut key, comprising:
activating the message transceiver and connecting the message transceiver to a network;
entering an e-mail window by pressing the shortcut key when the message transceiver is operating in other application window;
pressing the shortcut key in the e-mail window for inputting an email address.

7. The method of Claim 6, further comprising performing edition, reading, deleting mails in the e-mail window.

8. The method of Claim 6, further comprising establishing a contact list in the e-mail window.

9. The method of Claim 6, further comprising formatting information accessed in the other window and attached the formatted information to an e-mail.

10. The method of Claim 6, further comprising generating a flashing symbol when an incoming e-mail is received,

11. The method of Claim 6, wherein flashing symbol includes a flashing @.

12. The method of Claim 6, further comprising saving the e-mail address in a memory.
